# EUROPEAN PATENT APPLICATION

(11) **EP 4 804 054 A1**
(43) Date of publication of application: **09.09.2026**
(21) Application number: 23957465.0
(22) Date of filing: 06.12.2023
(51) Int. Cl.: G06F 18/20, F03B 15/06

(54) **WATER TURBINE SPEED REGULATION MANAGEMENT METHOD AND SYSTEM**

(30) Priority: 31.10.2023 CN 202311431048
(71) Applicant: CSGES Operation Management Branch Company, Guangzhou, Guangdong 511400 (CN)
(72) Inventor: HOU, Menglong, Guangzhou, Guangdong 511400 (CN); FANG, Yong, Guangzhou, Guangdong 511400 (CN); LI, Donglu, Guangzhou, Guangdong 511400 (CN); ZHANG, Yunxuan, Guangzhou, Guangdong 511400 (CN); JI, Huaijie, Guangzhou, Guangdong 511400 (CN); FENG, Wenyu, Guangzhou, Guangdong 511400 (CN); ZHOU, Yuquan, Guangzhou, Guangdong 511400 (CN); LIU, Zhenyu, Guangzhou, Guangdong 511400 (CN); LIU, Xin, Guangzhou, Guangdong 511400 (CN); CAI, Xichang, Guangzhou, Guangdong 511400 (CN); WANG, Jingyu, Guangzhou, Guangdong 511400 (CN)
(74) Representative: Cabinet Camus Lebkiri
(86) International application number: PCT/CN2023/136753
(87) International publication number: WO 2025/091612

(57) **Abstract**

A water turbine speed regulation management method includes: acquiring physical entity data of an energy storage hydropower station for pre-processing to obtain physical entity data for water turbine speed regulation, and acquiring a corresponding historical dataset according to the physical entity data for water turbine speed regulation, and pre-processing the historical dataset to obtain pre-processed physical entity data for water turbine speed regulation for comparing with preset data to obtain a deviation rate, and determining whether it is greater than or equal to a preset deviation rate threshold; if it is greater than or equal to the preset deviation rate threshold, generating correction information, correcting the physical entity data for water turbine speed regulation according to the correction information; if it is less than the preset deviation rate threshold, establishing a three-dimensional dynamic model according to the pre-processed physical entity data for dynamically regulating a speed of a water turbine.

## Description

### TECHNICAL FIELD

The present disclosure relates to the field of turbine speed regulation, and in particular, to a water turbine speed regulation management method and system.

### BACKGROUND

For an energy storage hydropower station, water turbines are required to convert the impact force of water flow into power, and provide the power to a generator, which is an environmentally friendly and clean way to obtain electricity. As an important device of the energy storage hydropower station, a water turbine plays a key role in the normal operation of the energy storage hydropower station. A water turbine speed regulation system is one of the important auxiliary control systems of a water turbine generator unit, which is composed of a speed regulator, a speed regulation cabinet, and an oil pressure apparatus. The operation quality of them directly determines the safety and stable operation of a water turbine unit. Reducing the failure rate of the water turbine speed regulation system is the most effective way to improve the reliability for operating the unit.

The existing safety management for the water turbine speed regulation system in the energy storage hydropower station only stays at the data level. By analyzing real-time data, monitoring for the water turbine speed regulation system is achieved. This management manner is not intuitive enough, and lacks overall control over the water turbine speed regulation system. Moreover, the existing safety management system cannot provide reference guidance for the control of the water turbine speed regulation system, and its functionality is weak, thus it is no longer suitable for the existing requirements. To address the above issues, effective technical solutions are urgently needed.

### SUMMARY

The purpose of the embodiments in the present disclosure is to provide a water turbine speed regulation management method and system, which can achieve targeted management for water turbine speed regulation by constructing physical entity data of water turbine speed regulation and establishing a three-dimensional dynamic model, thus facilitating the staff to understand the overall layout and operation state of the water turbines in the energy storage hydropower station, and improves the technology for accurate control of a water turbine speed regulation process.

A water turbine speed regulation management method is further provided in the embodiments of the present disclosure, which includes:
acquiring physical entity data of a current energy storage hydropower station, and pre-processing the physical entity data of the energy storage hydropower station to obtain physical entity data for water turbine speed regulation;
acquiring a corresponding historical dataset for water turbine speed regulation according to the physical entity data for water turbine speed regulation, and pre-processing the historical dataset to obtain pre-processed physical entity data for water turbine speed regulation;
comparing the pre-processed physical entity data for water turbine speed regulation with preset data to obtain a deviation rate;
determining whether the deviation rate is greater than or equal to a preset deviation rate threshold;
in response to the deviation rate being greater than or equal to the preset deviation rate threshold, generating correction information, and correcting the physical entity data for water turbine speed regulation according to the correction information; or
in response to the deviation rate being less than the preset deviation rate threshold, establishing a three-dimensional dynamic model according to the pre-processed physical entity data for water turbine speed regulation; and
dynamically regulating a speed of a water turbine according to the three-dimensional dynamic model.

Optionally, in the water turbine speed regulation management method described in the embodiments of the present disclosure, acquiring the corresponding historical dataset for water turbine speed regulation according to the physical entity data for water turbine speed regulation; and pre-processing the historical dataset to obtain the pre-processed physical entity data for water turbine speed regulation specifically includes:
acquiring the historical dataset for water turbine speed regulation, and performing a difference calculation between the historical dataset for water turbine speed regulation and an average value to obtain a data discrete value;
analyzing and comparing the data discrete value with a preset discrete threshold to obtain a data dispersion;
determining whether the data dispersion is greater than a preset dispersion threshold;
in response to the data dispersion being greater than the preset dispersion threshold, deleting corresponding historical data for water turbine speed regulation; or
in response to the data dispersion being less than or equal to the preset dispersion threshold, generating processed physical entity data for water turbine speed regulation.

Optionally, in the water turbine speed regulation management method described in the embodiments of the present disclosure, the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID parameters, PLC control data, a regulation mode, an operation plan, a maintenance plan, a control scheme, and fault data for water turbine speed regulator.

Optionally, in the water turbine speed regulation management method described in the embodiments of the present disclosure, in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically includes:
acquiring the physical entity data for water turbine speed regulation;
extracting a feature value according to the physical entity data for water turbine speed regulation;
comparing the feature value with a preset feature threshold and calculating a feature similarity;
determining whether the feature similarity is greater than or equal to a preset similarity threshold;
in response to the feature similarity being greater than or equal to the preset similarity threshold, determining the corresponding physical entity data for water turbine speed regulation as static constant data; or
in response to the feature similarity being less than the preset similarity threshold, determining the corresponding physical entity data for water turbine speed regulation as dynamic variable data; and
constructing the three-dimensional dynamic model according to the static constant data and the dynamic variable data.

Optionally, in the water turbine speed regulation management method described in the embodiments of the present disclosure, after constructing the three-dimensional dynamic model according to the static constant data and the dynamic variable data, the method further includes:
acquiring the static constant data and the dynamic variable data to generate a static validation set and a dynamic validation set;
inputting the static validation set into the three-dimensional dynamic model for parameter training to obtain a static loss value of the three-dimensional dynamic model;
in response to the static loss value being greater than a first loss threshold, generating first feedback information and adjusting parameters of the three-dimensional dynamic model according to the first feedback information;
inputting the dynamic validation set into the three-dimensional dynamic model for parameter training to obtain a dynamic loss value of the three-dimensional dynamic model; and
in response to the dynamic loss value being greater than a second loss threshold, generating second feedback information and adjusting the parameters of the three-dimensional dynamic model according to the second feedback information.

Optionally, in the water turbine speed regulation management method described in the embodiments of the present disclosure, dynamically regulating the speed of the water turbine according to the three-dimensional dynamic model specifically includes:
establishing a plurality of water turbine detection points and acquiring current rotational speed information of respective water turbine detection points;
comparing the current rotational speed information of the respective detection points with preset rotational speed information to obtain a rotational speed deviation rate;
determining whether the rotational speed deviation rate is greater than or equal to a preset rotational speed deviation threshold;
in response to the rotational speed deviation rate being greater than or equal to the preset rotational speed deviation threshold, generating water turbine fault information, and obtaining water turbine fault prediction information by inputting the water turbine fault information into a preset fault prediction model; or
in response to the rotational speed deviation rate being less than the preset rotational speed deviation threshold, determining the water turbine rotating normally, and storing and summarizing real-time rotational speed data of respective water turbine detection points.

In a second aspect, a water turbine speed regulation management system is provided in the embodiments of the present disclosure, and the system includes a memory and a processor, where the memory stores programs for a water turbine speed regulation management method, and upon the programs for the water turbine speed regulation management method being executed by the processor, the following operations are implemented:
acquiring physical entity data of a current energy storage hydropower station, and pre-processing the physical entity data of the energy storage hydropower station to obtain physical entity data for water turbine speed regulation;
acquiring a corresponding historical dataset for water turbine speed regulation according to the physical entity data for water turbine speed regulation, and pre-processing the historical dataset to obtain pre-processed physical entity data for water turbine speed regulation;
comparing the pre-processed physical entity data for water turbine speed regulation with preset data to obtain a deviation rate;
determining whether the deviation rate is greater than or equal to a preset deviation rate threshold;
in response to the deviation rate being greater than or equal to the preset deviation rate threshold, generating correction information, and correcting the physical entity data for water turbine speed regulation according to the correction information; or
in response to the deviation rate being less than the preset deviation rate threshold, establishing a three-dimensional dynamic model according to the pre-processed physical entity data for water turbine speed regulation; and
dynamically regulating a speed of a water turbine according to the three-dimensional dynamic model.

Optionally, in the water turbine speed regulation management system described in the embodiments of the present disclosure, acquiring the corresponding historical dataset for water turbine speed regulation according to the physical entity data for water turbine speed regulation; and pre-processing the historical dataset to obtain the pre-processed physical entity data for water turbine speed regulation specifically includes:
acquiring the historical dataset for water turbine speed regulation, and performing a difference calculation between the historical dataset for water turbine speed regulation and an average value to obtain a data discrete value;
analyzing and comparing the data discrete value with a preset discrete threshold to obtain a data dispersion;
determining whether the data dispersion is greater than a preset dispersion threshold;
in response to the data dispersion being greater than the preset dispersion threshold, deleting corresponding historical data for water turbine speed regulation; or
in response to the data dispersion being less than or equal to the preset dispersion threshold, generating processed physical entity data for water turbine speed regulation.

Optionally, in the water turbine speed regulation management system described in the embodiments of the present disclosure, the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID parameters, PLC control data, a regulation mode, an operation plan, a maintenance plan, a control scheme, and fault data for water turbine speed regulator.

Optionally, in the water turbine speed regulation management system described in the embodiments of the present disclosure, in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically includes:
acquiring the physical entity data for water turbine speed regulation, and extracting a feature value according to the physical entity data for water turbine speed regulation;
comparing the feature value with a preset feature threshold and calculating a feature similarity;
determining whether the feature similarity is greater than or equal to a preset similarity threshold;
in response to the feature similarity being greater than or equal to the preset similarity threshold, determining the corresponding physical entity data for water turbine speed regulation as static constant data; or
in response to the feature similarity being less than the preset similarity threshold, determining the corresponding physical entity data for water turbine speed regulation as dynamic variable data; and
constructing the three-dimensional dynamic model according to the static constant data and the dynamic variable data.

As set forth above, with the water turbine speed regulation management method and system provided in the embodiments of the present disclosure, the physical entity data of the energy storage hydropower station is preprocessed by acquiring the physical entity data of a current energy storage hydropower station, so as to obtain the physical entity data for water turbine speed regulation. The corresponding historical dataset for water turbine speed regulation is acquired according to the physical entity data for water turbine speed regulation; and the historical dataset is pre-processed to obtain pre-processed physical entity data for water turbine speed regulation; the pre-processed physical entity data for water turbine speed regulation is compared with the preset data to obtain the deviation rate; whether the deviation rate is greater than or equal to the preset deviation rate threshold is determined; in response to the deviation rate being greater than or equal to the preset deviation rate threshold, correction information is generated, and the physical entity data for water turbine speed regulation is corrected according to the correction information; or in response to the deviation rate being less than the preset deviation rate threshold, the three-dimensional dynamic model is established according to the pre-processed physical entity data for water turbine speed regulation. By constructing a three-dimensional dynamic model for the comprehensive management for water turbine speed regulation, targeted management for water turbine speed regulation is achieved, which facilitates the staff to understand the overall layout and operation state of water turbines in the energy storage hydropower station, and improves the accurate control of the water turbine speed regulation process.

Other features and advantages of the present disclosure will be described in the subsequent specification, and the advantages of the present disclosure can be obviously and easily inferred from the specification or understood through the implementation of the embodiments of the present disclosure. The purpose and other advantages of the present disclosure can be achieved and obtained through structures specifically indicated in the described specification, claims, and accompanying drawings.

### BRIEF DESCRIPTION OF THE DRAWINGS

In order to illustrate technical solutions in the embodiments of the present disclosure more clearly, the accompanying drawings needed to be used in the embodiments of the present disclosure will be introduced briefly. It should be understood that the following accompanying drawings only illustrate certain embodiments of the present disclosure, and should not be considered as limitation on the scope. For those skilled in the art, other relevant accompanying drawings can be obtained based on these accompanying drawings without creative labor.
FIG. 1 is a flowchart of a water turbine speed regulation management method provided in the embodiments of the present disclosure.
FIG. 2 is a flowchart of pre-processing physical entity data for water turbine speed regulation for a water turbine speed regulation management method provided in the embodiments of the present disclosure.
FIG. 3 is a flowchart of constructing a three-dimensional dynamic model according to static constant data and dynamic variable data for a water turbine speed regulation management method provided in the embodiments of the present disclosure.
FIG. 4 is a structural schematic diagram of a water turbine speed regulation management system provided in the embodiments of the present disclosure.

### DETAILED DESCRIPTION

The technical solutions in embodiments of the present disclosure will be described below clearly and completely with reference to the accompanying drawings in embodiments of the present disclosure. Obviously, the described embodiments are merely a part of the embodiments of the present disclosure, but not all of the embodiments of the present disclosure. Components of the embodiments of the present disclosure described and illustrated in the accompanying drawings can usually be arranged and designed in various different configurations. Therefore, the detailed description of the embodiments of the present disclosure provided in the accompanying drawings is not intended to limit the scope of the claimed disclosure, but only to represent selected embodiments of the present disclosure. Based on the embodiments of the present disclosure, all other embodiments obtained by those skilled in the art without creative labor are within the protection scope of the present disclosure.

It should be noted that similar numerals and letters represent similar items in the following accompanying drawings. Therefore, once an item is defined in an accompanying drawing, it does not need to be further defined and explained in subsequent accompanying drawings. Meanwhile, in the description of the present disclosure, the terms "first", "second", etc., are merely used to distinguish the description, but cannot be understood as indicating or implying relative importance.

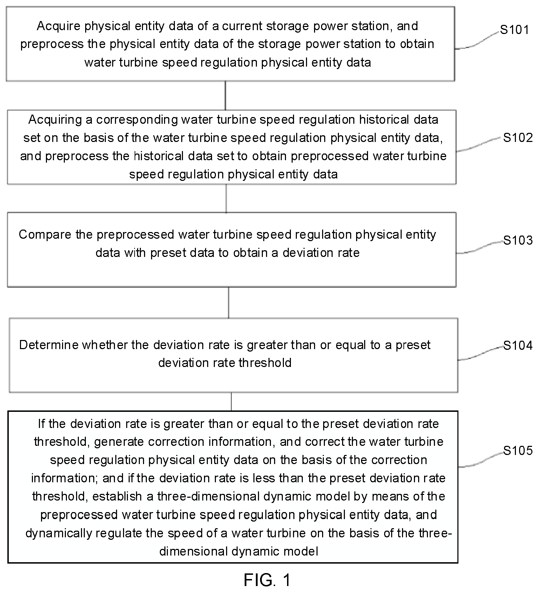

Referring to FIG. 1, FIG. 1 is a flowchart of a water turbine speed regulation management method in some embodiments of the present disclosure. The water turbine speed regulation management method is applied to a terminal device, and the water turbine speed regulation management method includes the following operations.

In S101, physical entity data of a current energy storage hydropower station is acquired, and the physical entity data of the energy storage hydropower station is pre-processed to obtain physical entity data for water turbine speed regulation.

In S102, a corresponding historical dataset for water turbine speed regulation is acquired according to the physical entity data for water turbine speed regulation; and the historical dataset is pre-processed to obtain pre-processed physical entity data for water turbine speed regulation.

In S103, the pre-processed physical entity data for water turbine speed regulation is compared with preset data to obtain a deviation rate.

In S104, whether the deviation rate is greater than or equal to a preset deviation rate threshold is determined.

In S105, in response to the deviation rate being greater than or equal to the preset deviation rate threshold, correction information is generated, and the physical entity data for water turbine speed regulation is corrected according to the correction information; or in response to the deviation rate being less than the preset deviation rate threshold, a three-dimensional dynamic model is established according to the pre-processed physical entity data for water turbine speed regulation, and a speed of a water turbine is dynamically regulated according to the three-dimensional dynamic model.

It should be noted that by establishing the three-dimensional dynamic model, real-time dynamic speed regulation for the water turbine may be achieved. At the same time, when errors occur during the water turbine speed regulation process, the errors may be corrected in real time to ensure the accuracy of the speed regulation.

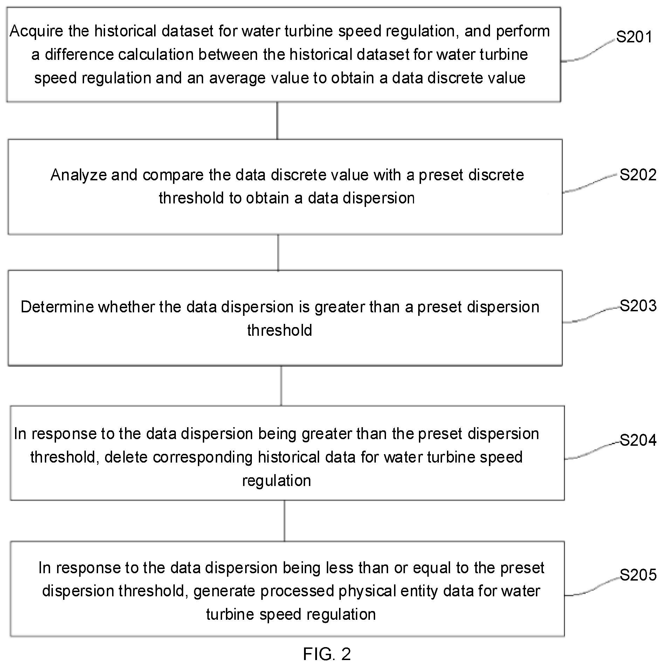

Refer to FIG. 2, FIG. 2 is a flowchart of pre-processing physical entity data for water turbine speed regulation for a water turbine speed regulation management method in some embodiments of the present disclosure. According to the embodiments of the present disclosure, acquiring the corresponding historical dataset for water turbine speed regulation according to the physical entity data for water turbine speed regulation; and pre-processing the historical dataset to obtain the pre-processed physical entity data for water turbine speed regulation specifically includes the following operations.

In S201, the historical dataset for water turbine speed regulation is acquired, and a difference calculation is performed between the historical dataset for water turbine speed regulation and an average value to obtain a data discrete value.

In S202, the data discrete value with a preset discrete threshold are analyzed and compared to obtain a data dispersion.

In S203, whether the data dispersion is greater than a preset dispersion threshold is determined.

In S204, in response to the data dispersion being greater than the preset dispersion threshold, corresponding historical data for water turbine speed regulation is deleted.

In S205, in response to the data dispersion being less than or equal to the preset dispersion threshold, processed physical entity data for water turbine speed regulation is generated.

It should be noted that by discretizing the item entity data for water turbine speed regulation, data with large discretization in the dataset may be removed, thus ensuring that an optimized dataset may improve the parameter accuracy of the model and enhance a result of model analysis upon establishing the three-dimensional dynamic model.

According to the embodiments of the present disclosure, the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID (i.e., proportion-integration-differentiation) parameters, PLC (i.e., programmable logic controller) control data, a regulation mode, an operation plan, a maintenance plan, a control scheme, and fault data for water turbine speed regulator.

It should be noted that by acquiring multi-dimensional physical entity data for water turbine speed regulation may make a speed regulation result more referential, and make an output result of the trained model more accurate during the training process of the model.

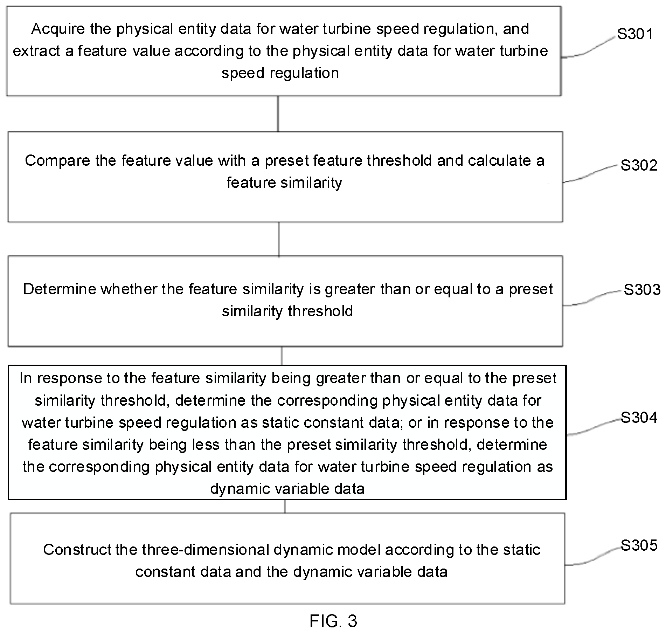

Referring to FIG. 3, FIG. 3 is a flowchart of constructing a three-dimensional dynamic model according to static constant data and dynamic variable data for a water turbine speed regulation management method in some embodiments of the present disclosure. According to the embodiments of the present disclosure, in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically includes the following operations.

In S301, the physical entity data for water turbine speed regulation is acquired, and a feature value is extracted according to the physical entity data for water turbine speed regulation.

In S302, the feature value is compared with a preset feature threshold, and a feature similarity is calculated.

In S303, whether the feature similarity is greater than or equal to a preset similarity threshold is determined.

In S304, in response to the feature similarity being greater than or equal to the preset similarity threshold, the corresponding physical entity data for water turbine speed regulation is determined as static constant data; or in response to the feature similarity being less than the preset similarity threshold, the corresponding physical entity data for water turbine speed regulation is determined as dynamic variable data.

In S305, the three-dimensional dynamic model is constructed according to the static constant data and the dynamic variable data.

It should be noted that by extracting features from the physical entity data for water turbine speed regulation and separating static data and dynamic data, construction for the three-dimensional dynamic model under different conditions may be implemented through the separated dynamic data and static data, resulting in higher accuracy of the constructed three-dimensional dynamic model.

According to the embodiments of the present disclosure, after constructing the three-dimensional dynamic model according to the static constant data and the dynamic variable data, the method further includes:
acquiring the static constant data and the dynamic variable data to generate a static validation set and a dynamic validation set;
inputting the static validation set into the three-dimensional dynamic model for parameter training to obtain a static loss value of the three-dimensional dynamic model;
in response to the static loss value being greater than a first loss threshold, generating first feedback information and adjusting parameters of the three-dimensional dynamic model according to the first feedback information;
inputting the dynamic validation set into the three-dimensional dynamic model for parameter training to obtain a dynamic loss value of the three-dimensional dynamic model; and
in response to the dynamic loss value being greater than a second loss threshold, generating second feedback information and adjusting the parameters of the three-dimensional dynamic model according to the second feedback information.

It should be noted that by extracting static data and dynamic data from the physical entity data for water turbine speed regulation, three-dimensional dynamic models under different data forms (dynamic and static) may be trained, and parameters of the models under different data forms may be adjusted to improve the accuracy of the three-dimensional dynamic model.

According to the embodiments of the present disclosure, dynamically regulating the speed of the water turbine according to the three-dimensional dynamic model specifically includes:
establishing a plurality of water turbine detection points and acquiring current rotational speed information of respective water turbine detection points;
comparing the current rotational speed information of the respective detection points with preset rotational speed information to obtain a rotational speed deviation rate;
determining whether the rotational speed deviation rate is greater than or equal to a preset rotational speed deviation threshold;
in response to the rotational speed deviation rate being greater than or equal to the preset rotational speed deviation threshold, generating water turbine fault information, and obtaining water turbine fault prediction information by inputting the water turbine fault information into a preset fault prediction model; or
in response to the rotational speed deviation rate being less than the preset rotational speed deviation threshold, determining the water turbine rotating normally, and storing and summarizing real-time rotational speed data of respective water turbine detection points.

It should be noted that by establishing water turbine detection points, it is possible to compare parameters at different positions of a shaft end during a rotation process of the water turbine. The detection points at different positions may be used to determine positional deviation and rotational vibration information during the rotation process of the water turbine, thereby analyzing defects or faults during the rotation process of the water turbine, and provided an optimal scheme for solving the faults.

According to the embodiments of the present disclosure, the method further includes: acquiring a historical dataset of a speed regulator of the water turbine, and constructing a speed regulation prediction model by using an ROPN modeling method;
constructing a speed regulation fault diagnosis model by using a deep-learning algorithm, so as to obtain a three-dimensional dynamic model for water turbine speed regulation safety management with adding the prediction model; and
receiving the three-dimensional dynamic model for water turbine speed regulation safety management with adding the prediction model sent from a prediction model construction unit, and performing safety management on water turbine speed regulation parameters by using the three-dimensional dynamic model for water turbine speed regulation safety management with adding the prediction model.

Specifically, the pre-processed real-time data of the speed regulator is received, and the pre-processed real-time data of the speed regulator is input into the three-dimensional dynamic model for water turbine speed regulation safety management with adding the prediction model and the speed regulation fault diagnosis model, to obtain a corresponding speed regulation scheme and a speed regulation fault diagnosis result.

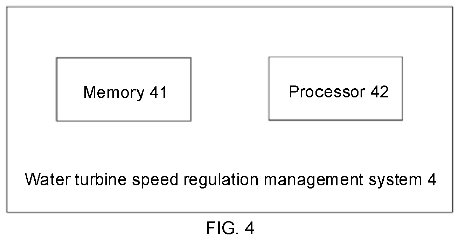

Referring to FIG. 4, FIG. 4 is a structural schematic diagram of a water turbine speed regulation management system in some embodiments of the present disclosure. In a second aspect, a water turbine speed regulation management system 4 is provided in the embodiments of the present disclosure, and the system includes a memory 41 and a processor 42, where the memory 41 stores programs for a water turbine speed regulation management method, and upon the programs for the water turbine speed regulation management method being executed by the processor, the following operations are implemented:
acquiring physical entity data of a current energy storage hydropower station, and pre-processing the physical entity data of the energy storage hydropower station to obtain physical entity data for water turbine speed regulation;
acquiring a corresponding historical dataset for water turbine speed regulation according to the physical entity data for water turbine speed regulation, and pre-processing the historical dataset to obtain pre-processed physical entity data for water turbine speed regulation;
comparing the pre-processed physical entity data for water turbine speed regulation with preset data to obtain a deviation rate;
determining whether the deviation rate is greater than or equal to a preset deviation rate threshold;
in response to the deviation rate being greater than or equal to the preset deviation rate threshold, generating correction information, and correcting the physical entity data for water turbine speed regulation according to the correction information; or
in response to the deviation rate being less than the preset deviation rate threshold, establishing a three-dimensional dynamic model according to the pre-processed physical entity data for water turbine speed regulation; and
dynamically regulating a speed of a water turbine according to the three-dimensional dynamic model.

It should be noted that by establishing the three-dimensional dynamic model, real-time dynamic speed regulation for the water turbine may be achieved. At the same time, when errors occur during the water turbine speed regulation process, the errors may be corrected in real time to ensure the accuracy of the speed regulation.

According to the embodiments of the present disclosure, acquiring the corresponding historical dataset for water turbine speed regulation according to the physical entity data for water turbine speed regulation; and pre-processing the historical dataset to obtain the pre-processed physical entity data for water turbine speed regulation specifically includes:
acquiring the historical dataset for water turbine speed regulation, and performing a difference calculation between the historical dataset for water turbine speed regulation and an average value to obtain a data discrete value;
analyzing and comparing the data discrete value with a preset discrete threshold to obtain a data dispersion;
determining whether the data dispersion is greater than a preset dispersion threshold;
in response to the data dispersion being greater than the preset dispersion threshold, deleting corresponding historical data for water turbine speed regulation; or
in response to the data dispersion being less than or equal to the preset dispersion threshold, generating processed physical entity data for water turbine speed regulation.

It should be noted that by discretizing the item entity data for water turbine speed regulation, data with large discretization in the dataset may be removed, thus ensuring that an optimized dataset may improve the parameter accuracy of the model and enhance a result of model analysis upon establishing the three-dimensional dynamic model.

According to the embodiments of the present disclosure, the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID parameters, PLC control data, a regulation mode, an operation plan, a maintenance plan, a control scheme, and fault data for water turbine speed regulator.

It should be noted that by acquiring multi-dimensional physical entity data for water turbine speed regulation may make a speed regulation result more referential, and make an output result of the trained model more accurate during the training process of the model.

According to the embodiments of the present disclosure, in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically includes:
acquiring the physical entity data for water turbine speed regulation;
extracting a feature value according to the physical entity data for water turbine speed regulation;
comparing the feature value with a preset feature threshold and calculating a feature similarity;
determining whether the feature similarity is greater than or equal to a preset similarity threshold;
in response to the feature similarity being greater than or equal to the preset similarity threshold, determining the corresponding physical entity data for water turbine speed regulation as static constant data; or
in response to the feature similarity being less than the preset similarity threshold, determining the corresponding physical entity data for water turbine speed regulation as dynamic variable data; and
constructing the three-dimensional dynamic model according to the static constant data and the dynamic variable data.

It should be noted that by extracting features from the physical entity data for water turbine speed regulation and separating static data and dynamic data, construction for the three-dimensional dynamic model under different conditions may be implemented through the separated dynamic data and static data, resulting in higher accuracy of the constructed three-dimensional dynamic model.

According to the embodiments of the present disclosure, after constructing the three-dimensional dynamic model according to the static constant data and the dynamic variable data, the method further includes:
acquiring the static constant data and the dynamic variable data to generate a static validation set and a dynamic validation set;
inputting the static validation set into the three-dimensional dynamic model for parameter training to obtain a static loss value of the three-dimensional dynamic model;
in response to the static loss value being greater than a first loss threshold, generating first feedback information and adjusting parameters of the three-dimensional dynamic model according to the first feedback information;
inputting the dynamic validation set into the three-dimensional dynamic model for parameter training to obtain a dynamic loss value of the three-dimensional dynamic model; and
in response to the dynamic loss value being greater than a second loss threshold, generating second feedback information and adjusting the parameters of the three-dimensional dynamic model according to the second feedback information.

It should be noted that by extracting static data and dynamic data from the physical entity data for water turbine speed regulation, three-dimensional dynamic models under different data forms (dynamic and static) may be trained, and parameters of the models under different data forms may be adjusted to improve the accuracy of the three-dimensional dynamic model.

According to the embodiments of the present disclosure, dynamically regulating the speed of the water turbine according to the three-dimensional dynamic model specifically includes:
establishing a plurality of water turbine detection points and acquiring current rotational speed information of respective water turbine detection points;
comparing the current rotational speed information of the respective detection points with preset rotational speed information to obtain a rotational speed deviation rate;
determining whether the rotational speed deviation rate is greater than or equal to a preset rotational speed deviation threshold;
in response to the rotational speed deviation rate being greater than or equal to the preset rotational speed deviation threshold, generating water turbine fault information, and obtaining water turbine fault prediction information by inputting the water turbine fault information into a preset fault prediction model; or
in response to the rotational speed deviation rate being less than the preset rotational speed deviation threshold, determining the water turbine rotating normally, and storing and summarizing real-time rotational speed data of respective water turbine detection points.

It should be noted that by establishing water turbine detection points, it is possible to compare parameters at different positions of a shaft end during a rotation process of the water turbine. The detection points at different positions may be used to determine positional deviation and rotational vibration information during the rotation process of the water turbine, thereby analyzing defects or faults during the rotation process of the water turbine, and provided an optimal scheme for solving the faults.

According to the embodiments of the present disclosure, the method further includes: acquiring a historical dataset of a speed regulator of the water turbine, and constructing a speed regulation prediction model by using an ROPN modeling method;
constructing a speed regulation fault diagnosis model by using a deep-learning algorithm, so as to obtain a three-dimensional dynamic model for water turbine speed regulation safety management with adding the prediction model; and
receiving the three-dimensional dynamic model for water turbine speed regulation safety management with adding the prediction model sent from a prediction model construction unit, and performing safety management on water turbine speed regulation parameters by using the three-dimensional dynamic model for water turbine speed regulation safety management with adding the prediction model.

Specifically, the pre-processed real-time data of the speed regulator is received, and the pre-processed real-time data of the speed regulator is input into the three-dimensional dynamic model for water turbine speed regulation safety management with adding the prediction model and the speed regulation fault diagnosis model, to obtain a corresponding speed regulation scheme and a speed regulation fault diagnosis result.

With the water turbine speed regulation management method and system disclosed in the present disclosure, the physical entity data of the energy storage hydropower station is preprocessed by acquiring the physical entity data of a current energy storage hydropower station, so as to obtain the physical entity data for water turbine speed regulation. The corresponding historical dataset for water turbine speed regulation is acquired according to the physical entity data for water turbine speed regulation; and the historical dataset is pre-processed to obtain pre-processed physical entity data for water turbine speed regulation; the pre-processed physical entity data for water turbine speed regulation is compared with the preset data to obtain the deviation rate; whether the deviation rate is greater than or equal to the preset deviation rate threshold is determined; in response to the deviation rate being greater than or equal to the preset deviation rate threshold, correction information is generated, and the physical entity data for water turbine speed regulation is corrected according to the correction information; or in response to the deviation rate being less than the preset deviation rate threshold, the three-dimensional dynamic model is established according to the pre-processed physical entity data for water turbine speed regulation. By constructing a three-dimensional dynamic model for the comprehensive management for water turbine speed regulation, targeted management for water turbine speed regulation is achieved, which facilitates the staff to understand the overall layout and operation state of water turbines in the energy storage hydropower station, and improves the accurate control of the water turbine speed regulation process.

In the several embodiments provided in the present disclosure, it should be understood that the disclosed devices and methods may be implemented in other ways. The device embodiments described above are only illustrative. For example, the division of units is only a logical function division, and there may be other division methods for actual implementation. For example, multiple units or components can be combined or integrated into another system, or some features may be ignored or may not be executed. In addition, the coupling, direct coupling, or communication connection between the various displayed or discussed components may be indirect coupling or communication connection through some interfaces, devices, or units, which may be in electrical, mechanical, or other forms.

The units illustrated as separate components above may or may not be physically separated, and the components displayed as units may or may not be physical units; they may be located in one place or distributed across multiple network units; some or all of these units may be selected according to actual needs to achieve the purpose of the scheme in the embodiments.

In addition, in various embodiments of the present disclosure, various functional units may all be integrated into a single processing unit, or various units may be treated as separate units, or two or more units may be integrated into a single unit; the aforementioned integrated units may be implemented either in the form of hardware or in the form of hardware plus software functional units.

Those skilled in the art may understand that all or part of the operations for implementing the above method embodiments may be accomplished through hardware related to program instructions. The aforementioned programs may be stored in a readable storage medium, and upon the programs being executed, the operations including the above method embodiments are performed. The aforementioned storage medium includes various media that are capable of storing program codes, such as a mobile storage device, a read-only memory (ROM), a random access memory (RAM), a magnetic disk, or an optical disk, etc.

Alternatively, if the above-mentioned integrated units in the present disclosure are implemented in the form of software functional modules and sold or used as independent products, they may also be stored in a readable storage medium. Based on this understanding, the technical solutions in the embodiments of the present disclosure, or the part that contributes to the existing technology, may essentially be embodied in the form of a software product. The software product is stored in a storage medium and includes several instructions to enable a computer device (which may be a personal computer, server, or network device, etc.) to execute all or part of the methods described in various embodiments of the present disclosure. The aforementioned storage medium includes various media that are capable of storing program codes, such as a mobile storage device, a ROM, a RAM, a magnetic disk or an optical disk, etc.

## Claims

1. A water turbine speed regulation management method, **characterized by** comprising:
acquiring physical entity data of a current energy storage hydropower station, and pre-processing the physical entity data of the energy storage hydropower station to obtain physical entity data for water turbine speed regulation;
acquiring a corresponding historical dataset for water turbine speed regulation according to the physical entity data for water turbine speed regulation, and pre-processing the historical dataset to obtain pre-processed physical entity data for water turbine speed regulation;
comparing the pre-processed physical entity data for water turbine speed regulation with preset data to obtain a deviation rate;
determining whether the deviation rate is greater than or equal to a preset deviation rate threshold;
in response to the deviation rate being greater than or equal to the preset deviation rate threshold, generating correction information, and correcting the physical entity data for water turbine speed regulation according to the correction information; or
in response to the deviation rate being less than the preset deviation rate threshold, establishing a three-dimensional dynamic model according to the pre-processed physical entity data for water turbine speed regulation; and
dynamically regulating a speed of a water turbine according to the three-dimensional dynamic model.

2. The water turbine speed regulation management method according to claim 1, **characterized in that** acquiring the corresponding historical dataset for water turbine speed regulation according to the physical entity data for water turbine speed regulation; and pre-processing the historical dataset to obtain the pre-processed physical entity data for water turbine speed regulation specifically comprises:
acquiring the historical dataset for water turbine speed regulation, and performing a difference calculation between the historical dataset for water turbine speed regulation and an average value to obtain a data discrete value;
analyzing and comparing the data discrete value with a preset discrete threshold to obtain a data dispersion;
determining whether the data dispersion is greater than a preset dispersion threshold;
in response to the data dispersion being greater than the preset dispersion threshold, deleting corresponding historical data for water turbine speed regulation; or
in response to the data dispersion being less than or equal to the preset dispersion threshold, generating processed physical entity data for water turbine speed regulation.

3. The water turbine speed regulation management method according to claim 2, **characterized in that** the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID parameters, PLC control data, a regulation mode, an operation plan, a maintenance plan, a control scheme, and fault data for water turbine speed regulator.

4. The water turbine speed regulation management method according to claim 3, **characterized in that** in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically comprises:
acquiring the physical entity data for water turbine speed regulation;
extracting a feature value according to the physical entity data for water turbine speed regulation;
comparing the feature value with a preset feature threshold and calculating a feature similarity;
determining whether the feature similarity is greater than or equal to a preset similarity threshold;
in response to the feature similarity being greater than or equal to the preset similarity threshold, determining the corresponding physical entity data for water turbine speed regulation as static constant data; or
in response to the feature similarity being less than the preset similarity threshold, determining the corresponding physical entity data for water turbine speed regulation as dynamic variable data; and
constructing the three-dimensional dynamic model according to the static constant data and the dynamic variable data.

5. The water turbine speed regulation management method according to claim 4, **characterized in that** after constructing the three-dimensional dynamic model according to the static constant data and the dynamic variable data, the method further comprises:
acquiring the static constant data and the dynamic variable data to generate a static validation set and a dynamic validation set;
inputting the static validation set into the three-dimensional dynamic model for parameter training to obtain a static loss value of the three-dimensional dynamic model;
in response to the static loss value being greater than a first loss threshold, generating first feedback information and adjusting parameters of the three-dimensional dynamic model according to the first feedback information;
inputting the dynamic validation set into the three-dimensional dynamic model for parameter training to obtain a dynamic loss value of the three-dimensional dynamic model; and
in response to the dynamic loss value being greater than a second loss threshold, generating second feedback information and adjusting the parameters of the three-dimensional dynamic model according to the second feedback information.

6. The water turbine speed regulation management method according to claim 5, **characterized in that** dynamically regulating the speed of the water turbine according to the three-dimensional dynamic model specifically comprises:
establishing a plurality of water turbine detection points and acquiring current rotational speed information of respective water turbine detection points;
comparing the current rotational speed information of the respective detection points with preset rotational speed information to obtain a rotational speed deviation rate;
determining whether the rotational speed deviation rate is greater than or equal to a preset rotational speed deviation threshold;
in response to the rotational speed deviation rate being greater than or equal to the preset rotational speed deviation threshold, generating water turbine fault information, and obtaining water turbine fault prediction information by inputting the water turbine fault information into a preset fault prediction model; or
in response to the rotational speed deviation rate being less than the preset rotational speed deviation threshold, determining the water turbine rotating normally, and storing and summarizing real-time rotational speed data of respective water turbine detection points.

7. A water turbine speed regulation management system, **characterized in that** the system comprises: a memory and a processor, wherein the memory stores programs for a water turbine speed regulation management method, and upon the programs for the water turbine speed regulation management method being executed by the processor, the following operations are implemented:
acquiring physical entity data of a current energy storage hydropower station, and pre-processing the physical entity data of the energy storage hydropower station to obtain physical entity data for water turbine speed regulation;
acquiring a corresponding historical dataset for water turbine speed regulation according to the physical entity data for water turbine speed regulation, and pre-processing the historical dataset to obtain pre-processed physical entity data for water turbine speed regulation;
comparing the pre-processed physical entity data for water turbine speed regulation with preset data to obtain a deviation rate;
determining whether the deviation rate is greater than or equal to a preset deviation rate threshold;
in response to the deviation rate being greater than or equal to the preset deviation rate threshold, generating correction information, and correcting the physical entity data for water turbine speed regulation according to the correction information; or
in response to the deviation rate being less than the preset deviation rate threshold, establishing a three-dimensional dynamic model according to the pre-processed physical entity data for water turbine speed regulation; and
dynamically regulating a speed of a water turbine according to the three-dimensional dynamic model.

8. The water turbine speed regulation management system according to claim 7, **characterized in that** acquiring the corresponding historical dataset for water turbine speed regulation according to the physical entity data for water turbine speed regulation; and pre-processing the historical dataset to obtain the pre-processed physical entity data for water turbine speed regulation specifically comprises:
acquiring the historical dataset for water turbine speed regulation, and performing a difference calculation between the historical dataset for water turbine speed regulation and an average value to obtain a data discrete value;
analyzing and comparing the data discrete value with a preset discrete threshold to obtain a data dispersion;
determining whether the data dispersion is greater than a preset dispersion threshold;
in response to the data dispersion being greater than the preset dispersion threshold, deleting corresponding historical data for water turbine speed regulation; or
in response to the data dispersion being less than or equal to the preset dispersion threshold, generating processed physical entity data for water turbine speed regulation.

9. The water turbine speed regulation management system according to claim 8, **characterized in that** the pre-processed physical entity data for water turbine speed regulation includes: a model number, an installation position, a quantity, a rotational speed, a power, current, voltage, an opening, an oil tank pressure, an oil tank temperature, an electric valve state, frequency swing, PID parameters, PLC control data, a regulation mode, an operation plan, a maintenance plan, a control scheme, and fault data for water turbine speed regulator.

10. The water turbine speed regulation management system according to claim 8, **characterized in that** in response to the deviation rate being less than the preset deviation rate threshold, establishing the three-dimensional dynamic model according to the pre-processed physical entity data for water turbine speed regulation and dynamically regulating the speed of the water turbine according to the three-dimensional dynamic model specifically comprises:
acquiring the physical entity data for water turbine speed regulation;
extracting a feature value according to the physical entity data for water turbine speed regulation;
comparing the feature value with a preset feature threshold and calculating a feature similarity;
determining whether the feature similarity is greater than or equal to a preset similarity threshold;
in response to the feature similarity being greater than or equal to the preset similarity threshold, determining the corresponding physical entity data for water turbine speed regulation as static constant data; or
in response to the feature similarity being less than the preset similarity threshold, determining the corresponding physical entity data for water turbine speed regulation as dynamic variable data; and
constructing the three-dimensional dynamic model according to the static constant data and the dynamic variable data.
